# EUROPEAN PATENT APPLICATION

(11) **EP 3 185 130 A1**
(43) Date of publication of application: **28.06.2017**
(21) Application number: 16204068.7
(22) Date of filing: 14.12.2016
(51) Int. Cl.: G06F 13/40, G06F 3/02

(54) **A SERIAL DATA COMMUNICATIONS SWITCHING DEVICE AND A METHOD OF OPERATING THEREOF**

(30) Priority: 22.12.2015 WO PCT/IB2015/002565
(71) Applicant: NXP USA, Inc., Austin TX 78735 (US)
(72) Inventor: STAUDENMAIER, Michael Andreas, 5656 AG Eindhoven (NL); AUBINEAU, Vincent, 31023 Toulouse cedex 1 (FR); MANGAUD, Philippe Jean Luc, 31023 Toulouse cedex 1 (FR)
(74) Representative: Pomper, Till

(57) **Abstract**

The present application relates to a serial data communications switching device and a method of operating the serial data communications switching device. The serial data communications switching device comprises one host port for connecting to a host device; a plurality of client ports each for connecting to one of a plurality of client devices; an arbiter configured to arbitrate the permission to send a message sequence between the plurality of the client devices according to an arbitration scheme; and a TX flow analyzer adapted to detect a client transmission received at one of the client port from a current client device currently having granted the permission and to instruct the arbiter to maintain the granted permission for the current client device for the ongoing client transmission.

## Description

### Field of the invention

The present invention relates to communication circuits, and particularly to a communication circuit for universal asynchronous receiver/transmitter (UART) interfaces.

### Background

Generally speaking, UARTs are commonly used with some communication standards such as RS-232, RS-422 and RS-485 for embedded systems communications. UART interfaces such as RS-232 ports are commonly used in serial ports, enabling communication between two hosts. However, the UART interface does not enable communication between one host and several clients.

In the art, a CMOS-LSI communications device NXP 28L194 Quad UART is available, which comprises one UART host interface and four UART client interfaces to enable communication between a host connecting to the UART host interface and a client connecting to one of the four UART client interfaces. The client is addressed by an address identifier associated with the client intended to receive a UART message sequence. The address identifier is included into the UART message sequence and the UART message sequence is broadcast via the client interfaces to all clients. Hence, the clients require enhanced UART transmitters/receivers filtering the broadcasted UART message sequences based on the respectively assigned address identifiers.

What is desired, therefore, is to provide a UART interface communication circuit which overcomes the above disadvantages, in particular to provide a UART interface communication circuit, which does not require enhance UART transmitter/receiver on client side.

### Summary

The present invention provides a serial data communications switching device and a method of operating serial data communications switching device as described in the accompanying claims. Specific embodiments of the invention are set forth in the dependent claims. These and other aspects of the invention will be apparent from and elucidated with reference to the embodiments described hereinafter.

### Brief description of the drawings

The accompanying drawings, which are incorporated herein and form a part of the specification, illustrate the present invention and, together with the description, further serve to explain the principles of the invention and to enable a person skilled in the pertinent art to make and use the invention.
FIG. 1 schematically illustrates a block diagram of a system including a serial data communications switching device according to an example of the present invention;
FIG. 2 schematically illustrates a block diagram of a transmission path part of a serial data communications switching device according to an example of the present invention;
FIG. 3 schematically illustrates a block diagram of a transmission path part of a serial data communications switching device according to another example of the present invention;
FIG. 4 schematically illustrates a state diagram relating to the transmission path of a serial data communications switching device according to an example of the present invention.
FIG. 5 schematically illustrates a state diagram relating to the transmission path of a serial data communications switching device according to another example of the present invention.
FIG. 6 schematically illustrates a block diagram of a reception path part of a serial data communications switching device according to an example of the present invention;
FIG. 7 schematically illustrates a block diagram of a reception path part of a serial data communications switching device according to another example of the present invention;
FIG. 8 schematically illustrates a state diagram relating to the reception path of a serial data communications switching device according to another example of the present invention.

### Detailed description

Embodiments of the present disclosure will be described below in detail with reference to drawings. Note that the same reference numerals are used to represent identical or equivalent elements in figures, and the description thereof will not be repeated. The embodiments set forth below represent the necessary information to enable those skilled in the art to practice the invention. Upon reading the following description in light of the accompanying drawing figures, those skilled in the art will understand the concepts of the invention and will recognize applications of these concepts not particularly addressed herein. It should be understood that these concepts and applications fall within the scope of the disclosure and the accompanying claims.

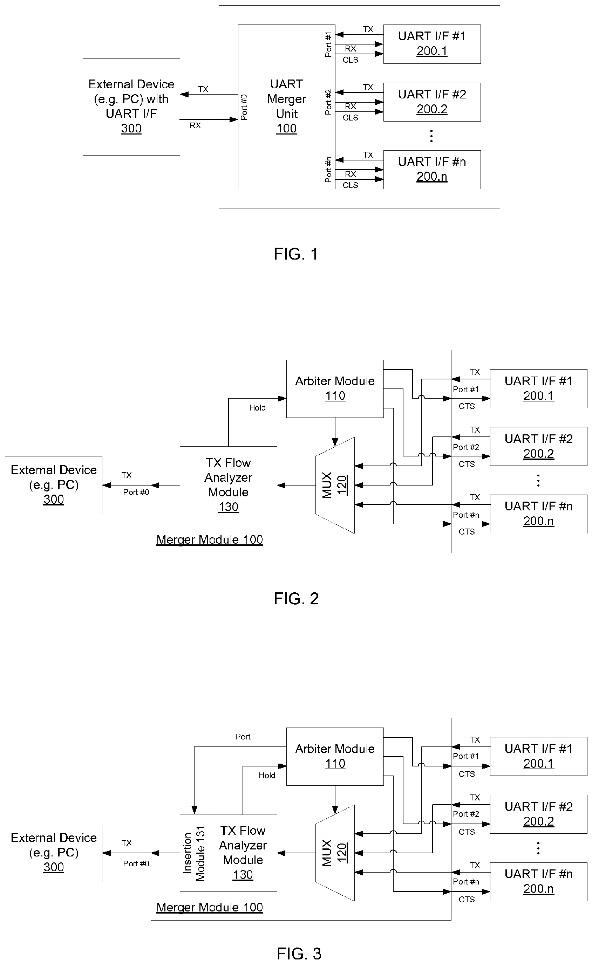

Referring to FIG. 1, a block diagram of a system including a UART merger unit 100 according to an example of the present application is schematically illustrated. The UART merger unit 100 is arranged between a host device 300, e.g. an external personal computer or any other external communication device, and a plurality of n client devices 200.1 to 200.n (in general, n > 1, an n is an integer), e.g. processing cores of a multi-core processor unit (CPU). The UART merger unit 100 is configured to support serial data communications between the host device 300 and anyone of the client device 200.1 to 200.n. The serial data communications may comply with one or more of various communication standards including e.g. TIA (formerly EIA) RS-232, RS-422 or RS-485. The serial data communications may comply with further standards and/or proprietary requirements.

The host device 300 and the client device 200.1 to 200.n in particular implement universal asynchronous receiver/transmitters (UARTs) enabling the host device 300 to issue message sequences to one of the client device 200.1 to 200.n and to receive message sequences from the client devices 200.1 to 200.n via a serial communications connection. The serial communications connection comprises separate connections TX and RX for transmitting and receiving message sequences.

UART is an asynchronous serial data link between a master and a client device. Asynchronous communication protocol does not use a clock to validate data e.g. in contrary of SPI communication. Asynchronous communication is obtained with fixed speeds as defined baud rate. UART converts bytes into serial bits and transmits those bits through a single wire, stripping out the start and stop bits for each character

For instance, each character is sent as a logic low start bit, a configurable number of data bits (usually 7 or 8, sometimes 5), an optional parity bit, and one or more logic high stop bits. The start bit signals the receiver that a new character is coming. Next five to eight bits, depending on the code set employed, represent a character. First, LSB of the data is sent, followed by data bits with an optional parity bit. At the end one or two stop bits are sent as a mark (logic high, '1') condition. Stop bit signals the receiver that transmission is completed. Since the start bit is a logic low (0) and the stop bit is a logic high (1) then there is always a clear separation between the previous character and the next one. In this design data is sent with one start bit, eight data bits from LSB to MSB and two stop bits.

Any message sequence communication between a master and a client device comprises several characters. The end of a message sequence is indicated by a message end sequence. The message end sequence comprises a sequence of one or more bytes. The message end sequence comprises in particular at least one of a byte representation of a carriage return character (CR) and a byte representation of a line feed character (LF).

In an exemplary use case, UARTs are implemented in each processing core of a multi-core processor unit (CPU) for debug message communications with an external debugging device. In particular, the external debugging device may be a host or personal computer (PC) running one or more debugging tools. As immediately understood, in systems with multi-core processor design, the number of UARTs each for a processing core would determine the number of counterpart UARTs required at the external debugging device unless the serial communications traffic is not routed via a common connection to the external debugging device as suggested by the UART merger unit 100 according to an example of the present application.

The exemplarily illustrated UART merger unit 100 comprises a host port #0 for serial communications with the host device 300. The host port #0 has at least a transmit terminal connectible to a transmit channel TX and a receive terminal connectible to a receive channel RX for carrying serial communications signals with the host device 300. The transmit channel TX is used for serial communications in transmit direction from the UART merger unit 100 to the host device 300. The receive channel RX is used for serial communications in receive direction from the host device 300 to the UART merger unit 100.

The exemplarily illustrated UART merger unit 100 further comprises a plurality of client ports #1 to #n, each for serial communications with one of the plurality of client devices 200.1 to 200.n. Each of the client ports #1 to #n has at least a transmit terminal connectible to a transmit channel TX and a receive terminal connectible to a receive channel RX for carrying serial communications signals with the respective one of the client device 200.1 to 200.n. Each of the transmit channel TX is used for serial communications in transmit direction from the connected one of the client devices 200.1 to 200.n to the UART merger unit 100. Each of the receive channel RX is used for serial communications in receive direction from the UART merger unit 100 to the connected one of the client devices 200.1 to 200.n.

The transmit channel RX and the receive channel TX may be separate channels; in particular, the transmit channel RX and the receive channel TX may be physically separated channels. More particular, the signals of the transmit channel RX and the receive channel TX are transmitted on separate wired connections.

Each of the client ports #1 to #n further has a control signal terminal connectible to a control channel CTS for indicating an arbitration control signal to the respective one of the client devices 200.1 to 200.n. The arbitration control signal is for instance a clear to send control (CTS) signal. As described below in more detail, the arbitration control signal is used to grant permission to send a message sequence. The arbitration control signals may be transmitted on a separate control channel and in particular on a channel physically separated from the transmit and receive channels RX and TX to each one of the client devices 200.1 to 200.n. In particular, the arbitration control signals are transmitted on separate wired connections each to one of the client devices 200.1 to 200.n.

The UART merger unit 100 may be implemented in a multi-core processor unit (CPU), a system on chip (SoC), a system in package (SiP), a system on package (SoP) and any processing system having a plurality of serial communications interfaces, in particular a plurality of UARTs, for seral communications to one counterpart serial communications interface, in particular a UART, of an external device such a PC.

In the following, the implementation and operation of the exemplarily illustrated UART merger unit 100 will be separately described with respect to the communication of message sequences in transmit direction and receive direction. It should be noted that the UART merger unit 100 is also referred to as serial data communications switching device. For the sake of readability, the term UART merger unit 100 is used and should not be understood as limiting the present application to serial data communications using universal asynchronous receiver/transmitters (UARTs).

Referring now to FIG. 2, a block diagram of a transmission path part of a UART merger unit 100 according to an example of the present application is schematically illustrated.

To allow for communications of message sequences from the plurality of client devices 200.1 to 200.n to the host device 300, the UART merger unit 100 comprises an arbiter module 110, a TX multiplexer module 120 and a TX flow analyzer module 130.

The serial communications connection (the transmit channel TX and receive channel RX) between the UART merger unit 100 and the host device 300 is a shared medium, through which the message sequences originating from anyone of the plurality of client devices 200.1 to 200.n is passed to the host device 300. The arbiter module 110 is configured to grant permission to send a message sequence. The permission is granted by the arbiter module 110 to only one client device 200.1 to 200.n at any given point in time such that collisions due to the presence of several message sequences from different client devices 200.1 to 200.n simultaneous in time or overlapping in time is avoided.

The arbiter module 110 is configured to arbitrate the permission to transmit message sequences by the client devices 200.1 to 200.n. The arbiter module 110 is arranged to generate arbitration control signals CTS each one for indicating to the respective one of the client devices 200.1 to 200.n whether or not it has granted permission to send a message sequence. The arbitration control signal CTS is representative of the permission granted to the client devices 200.1 to 200.n. For instance, the arbitration control signal CTS indicates to one of the client devices 200.1 to 200.n, e.g. the client device 200.1, that it is allowed to send a message sequence as long as it is logic low (0). The other client devices 200.1 to 200.n, e.g. the client devices 200.2 to 200.n, each receive an arbitration control signal CTS being logic high (1). The logic high (1) arbitration control signals CTS indicate to the other client devices 200.2 to 200.n that they are not allows to send a message sequence. In another example, the arbitration control signal CTS is asserted to logic high (1) to indicate to one of the client device 200.1 to 200.n the permission to send a message sequence and is asserted to logic low (0) to indicate to other of the client device 200.1 to 200.n that they are not allow to send a message sequence.

The arbiter module 110 is configured to grant the permission to send a message sequence for a predefined period of time to one client device 200.1 to 200.n. After elapse of the predefined period of time, the arbiter module 110 is configured to grant the permission to send a message sequence for a predefined period of time to a next client device 200.1 to 200.n in accordance with an arbitration scheme.

Further, the arbiter module 110 is configured to control the routing of a message sequence transmitted by the one of the client devices 200.1 to 200.n, which has currently granted permission to send a message sequence, and received at the respective one of the client ports #1 to #n to the TX flow analyzer module 130. In an example of the present application, the message sequence(s) received from any other client devices 200.1 to 200.n ignoring the arbitration control signal CTS indicating that they have not granted the permission, is blocked from being routed to the TX flow analyzer module 130.

In an example of the present application, the arbiter module 110 is arranged to generate a multiplexer control signal supplied to the n-to-1 TX multiplexer module 120. The transmit channel TX of the one of the client devices 200.1 to 200.n, which has currently granted permission to send a message sequence, is selectively connected by the n-to-1 TX multiplexer module 120 to the TX flow analyzer module 130. Each input of the n-to-1 TX multiplexer module 120 is connected to one of the client ports #1 to #n and the transmit terminals TX thereof.

The TX flow analyzer module 130 is arranged to detect a current transmission of a message sequence through the UART merger module 100 and to detect an end of the current transmission.

A current transmission of a message sequence is received at the client port #y (y = 1, ..., n; i.e. one of the client devices 200.1 to 200.n), to which the client device 200.y (y = 1, ..., n) having granted permission to send a message sequence is connected. The n-to-1 TX multiplexer module 120 is accordingly switched by the arbiter module 110 to selectively connect the transmit terminal TX of the client port #y to the TX flow analyzer module 130. In response to a detection of the current transmission, the TX flow analyzer module 130 is configured to supply a hold control signal to the arbiter module 110, in response to which the arbiter module 110 maintains the permission currently granted to the client devices200.y until the end of the message sequence is detected by the TX flow analyzer module 130. Once, the TX flow analyzer module 130 detects the end of a currently transmitted message sequence, the hold control signal is withdrawn by the TX flow analyzer module 130. Hence, the arbiter module 110 continues to arbitrate permission to send a message sequence in accordance with the arbitration scheme.

Referring now to FIG. 3, a block diagram of a transmission path part of a UART merger unit 100 according to another example of the present application is schematically illustrated. The UART merger unit 100 of FIG. 3 substantially corresponds to the exemplary UART merger unit 100 of FIG. 2 but the TX flow analyzer module 130 further comprises an insertion module 131, which is arranged to insert a port identifier into the message sequences received from one of the client devices 200.1 to 200.n to be forwarded to the host device 300. The port identifier inserted into a message sequence is generated by the insertion module 131 based on a port signal supplied by the arbiter module 110. The port signal is representative of the client port #y, to which the client device 200.y having granted the permission is connected.

The port identifier may comprise a sequence of one or more bytes, e.g. at the beginning of the message sequence, and may code a port number or any other identifier uniquely associated with one of the client ports #1 to #n.

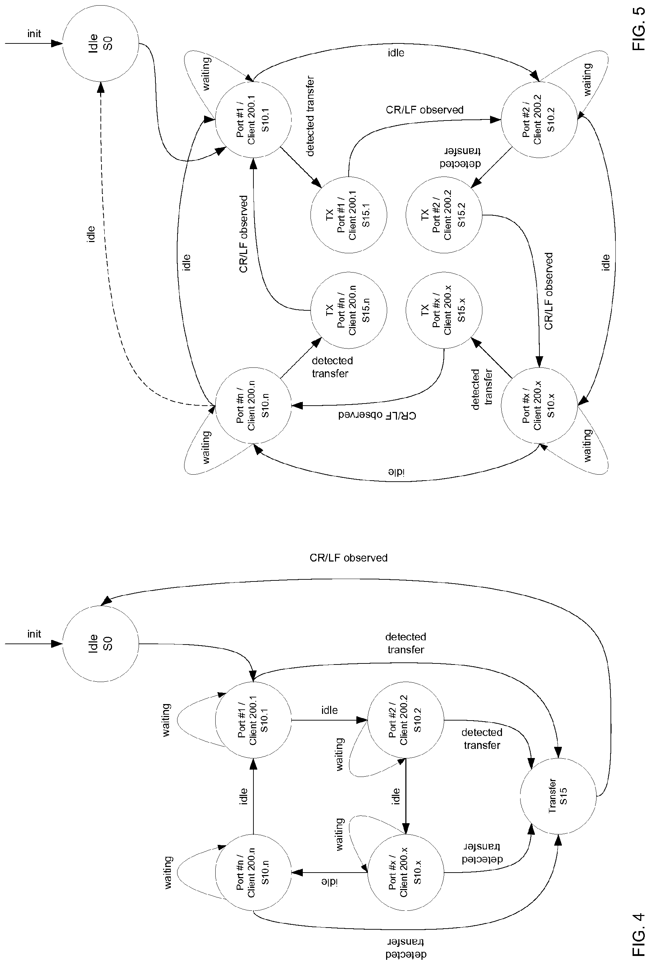

Referring now to FIG. 4, a state diagram of the UART merger unit 100 for handling serial data communications from one or the client devices 200.1 to 200.n to the host device 300 according to an example of the present application is schematically illustrated.

On initialization, the UART merger unit 100 enters into an idle state S0, in which the arbiter module 100 starts to arbitrate the permission to send message sequences between the client devices 200.1 to 200.n according to an arbitration scheme. In the example illustrated herein, the arbiter module 110 is configured to apply a round robin arbitration scheme, in accordance to which the permission to send message sequences is granted to the client devices 200.1 to 200.n in a repeated predefined sequence of the client devices 200.1 to 200.n. Without limitation thereto, the arbitration starts with the client port #1 and the client device 200.1 connected thereto in a ready state S10.1 of the UART merger unit 100.

In a ready state S10.1, the arbiter module 110 indicates to e.g. the client device 200.1 connected via the client port #1 that it has granted the permission to send a message sequence to the host device 300 through the UART merger unit 100. The arbiter module 110 maintains the permission to send a message sequence granted to the client device 200.1 until a predefined period of time is lapsed (a predefined waiting period). In case that the client device 200.1 is idle, i.e. does not start to a message sequence within the predefined period of time, the arbiter module 110 commences to arbitrate the permission to send a message sequence to the next client device 200.2.

In a ready state S10.2, the arbiter module 110 indicates to e.g. the client device 200.2 connected via the client port #2 that it has granted the permission to send a message sequence to the host device 300 through the UART merger unit 100. The arbiter module 110 maintains the permission to send a message sequence granted to the client device 200.2 until a predefined period of time is lapsed (a predefined waiting period). In case that the client device 200.2 is idle, i.e. does not start to a message sequence within the predefined period of time, the arbiter module 110 commences to arbitrate the permission to send a message sequence to the next client device 200.x.

In a ready state S10.x, the arbiter module 110 indicates to e.g. the client device 200.x connected via the client port #x that it has granted the permission to send a message sequence to the host device 300 through the UART merger unit 100. The arbiter module 110 maintains the permission to send a message sequence granted to the client device 200.x until a predefined period of time is lapsed (a predefined waiting period). In case that the client device 200.x is idle, i.e. does not start to a message sequence within the predefined period of time, the arbiter module 110 commences to arbitrate the permission to send a message sequence to the next client device 200.n.

It should be noted that the ready state S10.x may be understood to represent one or more ready states, in each of which one of client devices 200.x, the client device 200.x should be understood to represent one or more client devices, has granted the permission to send a message sequence for a predefined period of time.

In a ready state S10.n, the arbiter module 110 indicates to e.g. the client device 200.n connected via the client port #n that it has granted the permission to send a message sequence to the host device 300 through the UART merger unit 100. The arbiter module 110 maintains the permission to send a message sequence granted to the client device 200.n until a predefined period of time is lapsed (a predefined waiting period). In case that the client device 200.n is idle, i.e. does not start to a message sequence within the predefined period of time, the arbiter module 110 commences to arbitrate the permission to send a message sequence to the next client device 200.1 in accordance with the exemplary round robin scheme.

Those skilled in the art immediately understand from the above described that the illustrated round robin scheme or arbitration of the permission to send message sequences is only an example not intended to limit the scope of the present application. Further arbitration schemes, e.g. arbitration schemes with prioritization of one or more client devices, arbitration schemes with different predefined waiting periods and the like may be likewise applied.

Above, the operation of the arbiter module 110 has been described in case that the client devices 200.1 to 200.n having granted the permission to send message sequences stay idle, i.e. do not transmit message sequences to the host device 300 through the UART merger unit 100. On detecting an ongoing transmission of a current message sequence in a ready state S10, the UART merger unit 100 transits to a transfer state S15. In the transfer state S15, the arbitration of the permission to send a message sequence is stopped. The client device currently having granted the permission to send a message sequence maintains granted until the end of the ongoing current transmission of the message sequence is detected. As exemplified above, the end of a message sequence is detected on the basis of a predefined message end sequence included in the current message sequence. The message end sequence comprises a sequence of one or more bytes. The message end sequence comprises in particular at least one of a byte representation of a carriage return character (CR) and a byte representation of a line feed character (LF). Herein, the message end sequence a byte representation of a carriage return character (CR, ASCII = 13) and a byte representation of a line feed character (LF, ASCII = 10) for the sake of illustration.

On detecting the end of the current transmission of the message sequence, the UART merger unit 100 returns to the idle state S0, in which the arbitration of the permission to send message sequences between the client devices 200.1 to 200.n is re-started.

In case an ongoing transmission of a current message sequence from the client device 200.1 is detected in the ready state S10.1 the UART merger unit 100 transits to the transfer state S15, which is left on detecting the end of the current transmission of the message sequence from client device 200.1.

In case an ongoing transmission of a current message sequence from the client device 200.2 is detected in the ready state S10.2 the UART merger unit 100 transits to the transfer state S15, which is left on detecting the end of the current transmission of the message sequence from client device 200.2.

In case an ongoing transmission of a current message sequence from the client device 200.x is detected in the ready state S10.x the UART merger unit 100 transits to the transfer state S15, which is left on detecting the end of the current transmission of the message sequence from client device 200.x.

In case an ongoing transmission of a current message sequence from the client device 200.n is detected in the ready state S10.n the UART merger unit 100 transits to the transfer state S15, which is left on detecting the end of the current transmission of the message sequence from client device 200.n.

Referring now to FIG. 5, a state diagram of the UART merger unit 100 for handling serial data communications from one or the client devices 200.1 to 200.n to the host device 300 according to another example of the present application is schematically illustrated. In the following, the differences to the handling of transmit message sequences described with reference to FIG. 4 will be in particular outlined.

On initialization, the UART merger unit 100 enters into an idle state S0, in which the arbitration unit 110 starts to arbitrate the permission to send message sequences between the client devices 200.1 to 200.n. In the example illustrated herein, the arbiter module 110 is configured to apply a round robin scheme to successively grant permission to send message sequences to a next one of the client devices 200.1 to 200.n in e predefined repeated sequence.

Analogous to the handling of transmit message sequences described with reference to FIG. 4, the permission to send message sequences is subsequently granted between the client devices 200.1 to 200.n in a sequence one after another in the respective subsequent ready states S10.1 to S10.n. The permission to send message sequences is granted for a predefined period of time (a predefined waiting period) to only one of the client devices 200.1 to 200.n at a given time provided that the client device 200.y currently having granted the permission to send a message sequence is idle, i.e. an ongoing transmission originating from the client device 200.y currently having granted the permission to send a message sequence is not detected.

On detecting an ongoing transmission of a current message sequence in a ready state S10.y of the ready states S10.1 to S10.n, the arbiter enters a respective transfer state S15.y of transfer states S15.1 to S15.n. In the transfer state S15.y, the arbitration of the permission to send a message sequence is stopped. The client device currently having granted the permission to send a message sequence maintains granted until the end of the ongoing current transmission of the message sequence is detected.

On detecting the end of the current transmission of the message sequence, the UART merger unit 100 transits to the next ready state S10.y' according to the applied arbitration scheme (if y' = n then y' = 1 otherwise y' = y+1 for the exemplary round robin arbitration scheme).

In case an ongoing current transmission of a message sequence from the client device 200.1 is detected in the ready state S10.1 the UART merger unit 100 transits to the transfer state S15.1, which is left on detecting the end of the current transmission of the message sequence from client device 200.1. The UART merger unit 100 then transits to the next ready state S10.y' according to the applied arbitration scheme, which is herein the ready state S10.2.

In case an ongoing current transmission of a message sequence from the client device 200.2 is detected in the ready state S10.2 the UART merger unit 100 transits to the transfer state S15.2, which is left on detecting the end of the current transmission of the message sequence from client device 200.2. The UART merger unit 100 then transits to the next ready state S10.y' according to the applied arbitration scheme, which is herein the ready state S10.x.

In case an ongoing current transmission of a message sequence from the client device 200.x is detected in the ready state S10.x the UART merger unit 100 transits to the transfer state S15.x, which is left on detecting the end of the current transmission of the message sequence from client device 200.x. The UART merger unit 100 then transits to the next ready state S10.y' according to the applied arbitration scheme, which is herein the ready state S10.n.

In case an ongoing current transmission of a message sequence from the client device 200.n is detected in the ready state S10.n the UART merger unit 100 transits to the transfer state S15.n, which is left on detecting the end of the current transmission of the message sequence from client device 200.n. The UART merger unit 100 then transits to the next ready state S10.y' according to the applied arbitration scheme, which is herein the ready state S10.1.

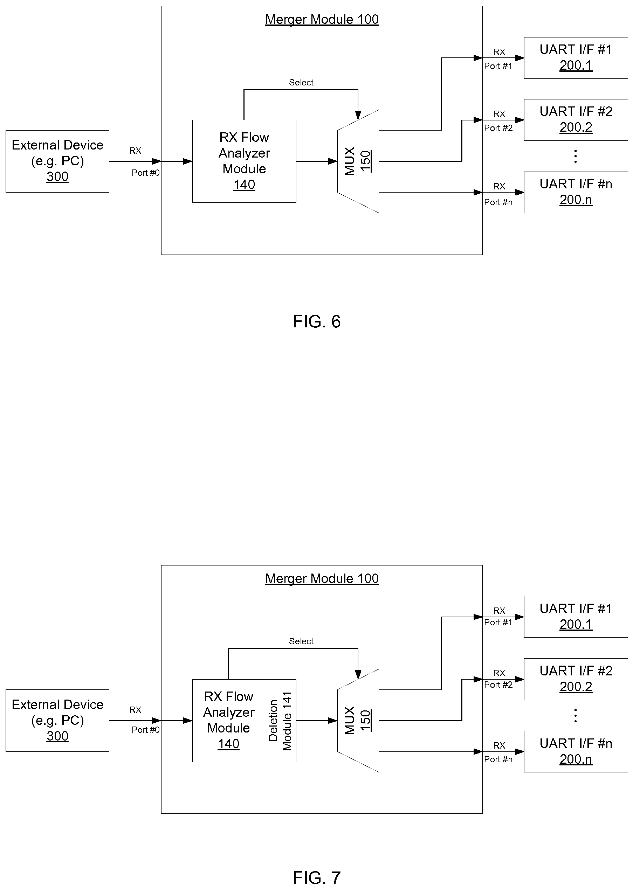

Referring now to FIG. 6, a block diagram of a reception path part of a UART merger unit 100 according to an example of the present application is schematically illustrated.

To allow for communications of message sequences from the host device 300 to the plurality of client devices 200.1 to 200.n, the UART merger unit 100 comprises a RX flow analyzer module 140 and a RX multiplexer module 150.

The serial communications connection (the transmit channel TX and receive channel RX) from the host device 300 and to the UART merger unit 100 is a shared medium, through which the message sequences destined at anyone of the plurality of client devices 200.1 to 200.n is passed. The RX analyzer module 140 is configured to selectively pass the message sequence received from the host device 300 to a respective one of the client devices 200.1 to 200.n, to which the received message sequence is destined.

In particular, the RX flow analyzer module 140 is configured to control the routing of a message sequence transmitted by the host device 300 and received at the host port #0 to one of the client ports #1 to #n, which is connected to the respective one of the client device 200.1 to 200.n, to which the message sequence is destined.

In an example of the present application, the RX flow analyzer module 140 is arranged to generate a multiplexer control signal supplied to the 1-to-n RX multiplexer module 150. The receive channel RX of the one of the client devices 200.1 to 200.n, to which the message sequence is destined, is selectively connected by the 1-to-n RX multiplexer module 150. Each output of the 1-to-n RX multiplexer module 150 is connected to one of the client ports #1 to #n and the receive terminals RX thereof.

A current transmission of message sequence destined to one of the client devices 200.1 to 200.n is received at the host port #0, to which the host module 300 is connected, and is supplied to the RX flow analyzer module 140. The RX flow analyzer module 140 is configured to determine, to which client port #1 to #n the current transmission is to be routed such that the current transmission is received by the one of the client devices 200.1 to 200.n, to which it is intended. The RX flow analyzer module 140 is arranged to analyze the current transmission to detect a port identifier included in the message sequence of the current transmission.

The port identifier may comprise a sequence of one or more bytes and may code a port number or any other identifier uniquely associated with one of the client ports #1 to #n. The port identifier may be located at a predefined position within the message sequence, e.g. at the beginning of the message sequence or at a predefined offset from the beginning of the message sequence. The port identifier may be further detected by a unique sequence, e.g. a unique byte sequence, indicating referencing to e.g. a preceding port identifier or a succeeding port identifier.

Based on the detected port identifier, the RX flow analyzer module 140 is arranged to generate a multiplexer select signal, which controls the 1-to-n RX multiplexer module 150 to selectively route the current transmission to the client port #y associated with the detected port identifier. The current transmission is then forwarded by the UART merger unit 100 to the client device 200.y. The message sequence of the current transmission is transmitted only to the client device 200.y in accordance with the included port identifier. The other client devices 200.1 to 200.n (expect the client device 200.y) do not receive the message sequence of the current transmission received from the host device 300.

Referring now to FIG. 7, a block diagram of a reception path part of a UART merger unit 100 according to another example of the present application is schematically illustrated. The UART merger unit 100 of FIG. 7 substantially corresponds to the exemplary UART merger unit 100 of FIG. 6 but the RX flow analyzer module 140 further comprises a deletion module 131, which is arranged to remove a port identifier included in the message sequences received from the host device 300 and to be forwarded to one of the client devices 200.1 to 200.n in accordance with the included port identifier.

A message sequence of the current transmission, from which the port identifier is removed, is transmitted only to the client device 200.y in accordance with the included port identifier.

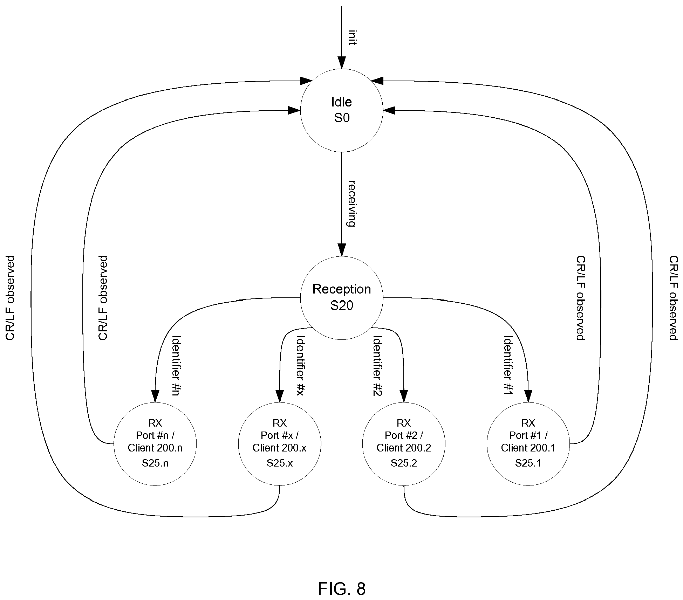

Referring now to FIG. 8, a state diagram of the UART merger unit 100 for handling serial data communications from the host device 300 to one of the client devices 200.1 to 200.n to according to an example of the present application is schematically illustrated.

On initialization, the UART merger unit 100 enters into an idle state S0, in which the UART merger unit 100 is prepared to receive message sequences from the host device 300.

On receiving a current transmission of a message sequence from the host device 300, the UART merger unit 100 transits to receive state S20. The current transmission of a message sequence is detected by the RX flow analyzer 140 accordingly configured. In the receive state S20, the RX flow analyzer 140 is configured to analyze the message sequence of the current transmission and to detect a port identifier included therein.

Based on the detected port identifier in the message sequence of the current transmission, the UART merger unit 100 selectively transits to one of the forwarding states S25.1 to S25.n. In the forwarding state S25.y, the UART merger unit 100 is controlled by the RX flow analyzer 140 to forward the message sequence of the current transmission to the client port #y associated with the detected port identifier. The message sequence of the current transmission is then received by the client device 200.y of the client device 200.1 to 200.n, which is connected to the client port #y. The RX flow analyzer 140 controls the 1-to-n RX multiplexer module 150 accordingly using the multiplexer control signal.

For instance, the UART merger unit 100 transits to the forwarding state S25.1 in response to a detected port identifier associated with the client port #1 connected to the client device 200.1. The multiplexer control signal generated by the RX flow analyzer 140 controls the 1-to-n RX multiplexer module 150 to selectively connect the output of the RX flow analyzer module 140 to the client port #1. The message sequence of the current transmission is hence forwarded by the UART merger unit 100 to the client device 200.1.

For instance, the UART merger unit 100 transits to the forwarding state S25.2 in response to a detected port identifier associated with the client port #2 connected to the client device 200.2. The multiplexer control signal generated by the RX flow analyzer 140 controls the 1-to-n RX multiplexer module 150 to selectively connect the output of the RX flow analyzer module 140 to the client port #2. The message sequence of the current transmission is hence forwarded by the UART merger unit 100 to the client device 200.2.

For instance, the UART merger unit 100 transits to the forwarding state S25.x in response to a detected port identifier associated with the client port #x connected to the client device 200.x. The multiplexer control signal generated by the RX flow analyzer 140 controls the 1-to-n RX multiplexer module 150 to selectively connect the output of the RX flow analyzer module 140 to the client port #x. The message sequence of the current transmission is hence forwarded by the UART merger unit 100 to the client device 200.x.

It should be noted that the forwarding state S25.x may be understood to represent one or more forwarding states, in each of which the message sequence of the current transmission from the host device 300 is forwarded to one of the client devices 200.x, the client device 200.x should be understood to represent one or more client devices.

For instance, the UART merger unit 100 transits to the forwarding state S25.n in response to a detected port identifier associated with the client port #n connected to the client device 200.n. The multiplexer control signal generated by the RX flow analyzer 140 controls the 1-to-n RX multiplexer module 150 to selectively connect the output of the RX flow analyzer module 140 to the client port #n. The message sequence of the current transmission is hence forwarded by the UART merger unit 100 to the client device 200.n.

The 1-to-n RX multiplexer module 150 is controlled by the RX flow analyzer module 140 to maintain the selective connection until the RX flow analyzer module 140 detects the end of the current transmission. As exemplified above, the end of a message sequence is detected on the basis of a predefined message end sequence included in the current message sequence. The message end sequence comprises a sequence of one or more bytes. The message end sequence comprises in particular at least one of a byte representation of a carriage return character (CR) and a byte representation of a line feed character (LF). Herein, the message end sequence a byte representation of a carriage return character (CR, ASCII = 13) and a byte representation of a line feed character (LF, ASCII = 10) for the sake of illustration.

On detection of the end of the current transmission, the UART merger unit 100 transits back to the idle state S0, in which the UART merger unit 100 is prepared to receive a next message sequence from the host device 300.

According to an example of the present application, a serial data communications switching device is provided, which comprises one host port, a plurality of client ports, an arbiter and a TX flow analyzer. The host port is provided for connecting to a host device. In particular, the host port comprises a reception terminal and a reception terminal for connecting to a transmission channel TX and a reception channel RX for serial data communications with the host device.

Each of the plurality of client ports are provided for connecting to one of a plurality of client devices. In particular, each client port comprises a reception terminal and a reception terminal for connecting to a transmission channel TX and a reception channel RX for serial data communications with one of the client devices and each client port further comprises a control terminal for connecting to a control channel for indicating an arbitration control signal, e.g. a clear to send signal (CTS), to the one of the client devices.

The arbiter is configured to arbitrate a permission to send a message sequence between the plurality of the client devices according to an arbitration scheme and to grant a permission to send a message sequence to only one the client devices connected to a respective one of the client ports at any given point in time. The granted permission to send a message sequence is for instance indicated through an arbitration control signal applied to the control terminal. The TX flow analyzer is adapted to detect a client transmission of a message sequence received at one of the client ports from a current client device currently having granted the permission and to instruct the arbiter to maintain the granted permission for the current client device for the ongoing client transmission.

According to an example of the present application, the host port is arranged for connecting to a universal asynchronous receiver/transmitter, UART, of the host device, wherein each of the client ports is arranged for connecting to a universal asynchronous receiver/transmitter, UART, of one of the client devices.

According to an example of the present application, the arbitration scheme is a time-base arbitration scheme.

According to an example of the present application, the arbiter is configured to grant the permission to each one of the client devices for a predefined period of time.

According to an example of the present application, the TX flow analyzer is configured to detect an end of the client transmission and to instruct the arbiter to maintain the granted permission for the current client device until the end of the client transmission is detected.

According to an example of the present application, the TX flow analyzer is configured to analyze the message sequence of the current transmission and to detect an end sequence included therein.

According to an example of the present application, the serial data communications switching device further comprises an n-to-1 TX multiplexer having a plurality of inputs each connected to one of the plurality of client ports and an output connected to the TX flow analyzer. The arbiter is further configured to control the n-to-1 TX multiplexer to selectively connect the one of the client ports to the TX flow analyzer in accordance with the arbitration scheme.

According to an example of the present application, the arbiter is further configured to control the n-to-1 TX multiplexer to selectively connect the one client port to the input of the TX flow analyzer, which is connected to the current client device.

According to an example of the present application, the serial data communications switching device further comprises a RX flow analyzer. The RX flow analyzer is configured to detect a host transmission of a message sequence received at the host port from the host device, to detect a port identifier comprises in the host transmission of the message sequence, and to control the serial data communications switching device to forward the host transmission to one of the client ports, which is associated with the detected port identifier.

According to an example of the present application, the serial data communications switching device further comprises a 1-to-n RX multiplexer having an input connected to the RX flow analyzer and a plurality of outputs each connected to one of the plurality of client ports. The RX flow analyzer is further configured to control the 1-to-n RX multiplexer to selectively connect the output of the RX flow analyzer to one of the client ports in accordance with the detected port identifier.

According to an example of the present application, a data processing system is provided, which comprises a plurality of serial data communications interfaces and a serial data communications switching device. Each one of the client ports is connected to one of the serial data communications interfaces.

According to an example of the present application, the data processing system is at least one of a multi-core processor unit, CPU, a system-on-chip, SoC, with multi-core design, a system-in-package, SiP, with multi-core design, and a system-on-package, SoP with multi-core design. Each one of the serial data communications interfaces is arranged with one of a plurality of processing cores of the data processing system.

According to an example of the present application, a method of operating a serial data communications switching device is provided, which comprises one host port provided for connecting to a host device and a plurality of client ports each for connecting to one of a plurality of client devices. The permission to send a message sequence are arbitrated between the plurality of the client devices according to an arbitration scheme. The permission to send a message sequence is granted to only one the client devices connected to a respective one of the client ports at any given point in time. A client transmission of a message sequence received at one of the client ports transmitted by a current client device currently having granted the permission is detected and the granted permission for the current client device is maintained for the ongoing client transmission.

According to an example of the present application, the grating of permission further comprises granting the permission to each one of the client devices for a predefined period of time.

According to an example of the present application, an end of the client transmission is detected; and the granted permission for the current client device is maintained until the end of the client transmission is detected.

According to an example of the present application, the message sequence of the current transmission is analyzed; and an end sequence included in the message sequence of the current transmission is detected.

According to an example of the present application, an n-to-1 TX multiplexer is controlled to selectively connect the one of the client ports to the host port in accordance with the arbitration scheme.

According to an example of the present application, a host transmission of a message sequence received at the host port and transmitted by the host device is detected; a port identifier comprises in the host transmission of the message sequence is detected, and the host transmission is forwarded to one of the client ports, which is associated with the detected port identifier.

According to an example of the present application, the serial data communications switching device may further comprise a transmission rate conversion module, which is arranged to support one or more client side transmission rates for the serial data communication between UART merger unit 100 and the client devices 200.1 to 200.n and one or more host side transmission rates for the serial data communication between UART merger unit 100 and the host device 300. The client side transmission rates and the host side transmission rates may differ. In particular, the host side transmission rate is selected to be higher than the one or more client side transmission rates. More particular, the host side transmission rate is selected to be a multiple of the client side transmission rate. The multiple may correspond to the number of client devices connected to the UAR merger unit 100. The transmission rate conversion module may comprise a buffer for temporarily storing the serial data to allow for operating at different transmission rates on host side and client side.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the disclosure herein may be implemented as electronic hardware, computer software, or combinations of both. To illustrate clearly this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the disclosure herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or an algorithm or the sequence of states described in connection with the disclosure herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary designs, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general purpose or special purpose computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

Some of the above embodiments, as applicable, may be implemented using a variety of different circuitry components. For example, the exemplary topology in the figures and the discussion thereof is presented merely to provide a useful reference in discussing various aspects of the invention. Of course, the description of the topology has been simplified for purposes of discussion, and it is just one of many different types of appropriate topologies that may be used in accordance with the invention. Those skilled in the art will recognize that the boundaries between logic blocks are merely illustrative and that alternative embodiments may merge logic blocks or circuit elements or impose an alternate decomposition of functionality upon various logic blocks or circuit elements. For example, one or more of the flow analyzer modules, the arbiter module and the multiplexer modules may be integrated with each other or with further logical components.

Thus, it is to be understood that the architectures depicted herein are merely exemplary, and that in fact many other architectures can be implemented which achieve the same functionality. In an abstract, but still definite sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermediate components. Likewise, any two components so associated can also be viewed as being "operably connected", or "operably coupled", to each other to achieve the desired functionality.

In the claims, any reference signs placed between parentheses shall not be construed as limiting the claim. The word "comprising" does not exclude the presence of other elements or operations then those listed in a claim. Furthermore, the terms "a" or "an", as used herein, are defined as one or as more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an". The same holds true for the use of definite articles. Unless stated otherwise, terms such as "first" and "second" are used to distinguish arbitrarily between the elements such terms describe. Thus, these terms are not necessarily intended to indicate temporal or other prioritization of such elements. The mere fact that certain measures are recited in mutually different claims does not indicate that a combination of these measures cannot be used to advantage.

The previous description of the disclosure is provided to enable any person skilled in the art to make or use the disclosure. Various modifications to the disclosure will be readily apparent to those skilled in the art, and the generic principles defined herein may be applied to other variations without departing from the spirit or scope of the disclosure. Thus, the disclosure is not intended to be limited to the examples and designs described herein but is to be accorded the widest scope consistent with the principles and novel features disclosed herein.

## Claims

1. A serial data communications switching device, comprising:
one host port provided for connecting to a host device;
a plurality of client ports each for connecting to one of a plurality of client devices;
an arbiter configured
to arbitrate a permission to send a message sequence between the plurality of the client devices according to an arbitration scheme and
to grant the permission to only one the client devices connected to a respective one of the client ports at any given point in time; and
a TX flow analyzer adapted
to detect a client transmission of a message sequence received at one of the client port from a current client device currently having granted the permission and
to instruct the arbiter to maintain the granted permission for the current client device for the ongoing client transmission.

2. The serial data communications switching device according to claim 1,
wherein the host port is arranged for connecting to a universal asynchronous receiver/transmitter, UART, of the host device, wherein each of the client ports is arranged for connecting to a universal asynchronous receiver/transmitter, UART, of one of the client devices.

3. The serial data communications switching device according to claim 1 or claim 2,
wherein the arbitration scheme is a time-base arbitration scheme,
wherein the arbiter is configured to grant the permission to each one of the client devices for a predefined period of time

4. The serial data communications switching device according to any one of the claims 1 to 3,
wherein the TX flow analyzer is configured to analyze the message sequence of the client transmission and to detect an end sequence included therein,
wherein the TX flow analyzer is configured to detect an end of the client transmission and to instruct the arbiter to maintain the granted permission for the current client device until the end of the client transmission is detected.

5. The serial data communications switching device according to any one of the claims 1 to 4, further comprising
an n-to-1 TX multiplexer having a plurality of inputs each connected to one of the plurality of client ports and an output connected to the TX flow analyzer,
wherein the arbiter is further configured to control the n-to-1 TX multiplexer to selectively connect the one of the client ports to the TX flow analyzer in accordance with the arbitration scheme.

6. The serial data communications switching device according to claim 5,
wherein the arbiter is further configured to control the n-to-1 TX multiplexer to selectively connect the one client port to the TX flow analyzer, which is connected to the current client device.

7. The serial data communications switching device according to any one of the claims 1 to 6, further comprising:
a RX flow analyzer configured
to detect a host transmission of a message sequence received at the host port,
to detect a port identifier comprises in the host transmission of the message sequence, and
to control the serial data communications switching device to forward the host transmission to one of the client ports, which is associated with the detected port identifier.

8. The serial data communications switching device according to claim 7, further comprising:
a 1-to-n RX multiplexer having an input connected to the RX flow analyzer and a plurality of outputs each connected to one of the plurality of client ports,
wherein the RX flow analyzer is further configured to control the 1-to-n RX multiplexer to selectively connect the RX flow analyzer to one of the client ports in accordance with the detected port identifier,
wherein the RX flow analyzer is configured to analyze the message sequence of the host transmission and to detect an end sequence included therein to enable processing a next host transmission.

9. A data processing system, comprising:
a plurality of serial data communications interfaces, and
a serial data communications switching device according to anyone of the claims 1 to 8,
wherein each one of the client ports is connected to one of the serial data communications interfaces.

10. The data processing system according to claim 9,
wherein the data processing system is at least one of a multi-core processor unit, CPU, a system-on-chip, SoC, with multi-core design, a system-in-package, SiP, with multi-core design, and a system-on-package, SoP with multi-core design,
wherein each one of the serial data communications interfaces is arranged with one of a plurality of processing cores of the data processing system.

11. A method of operating a serial data communications switching device, which comprises one host port provided for connecting to a host device and a plurality of client ports each for connecting to one of a plurality of client devices,
the method comprising:
arbitrating a permission to send a message sequence between the plurality of the client devices according to an arbitration scheme;
granting the permission to only one the client devices connected to a respective one of the client ports at any given point in time;
detecting a client transmission of a message sequence received at one of the client ports from a current client device currently having granted the permission; and
maintaining the granted permission for the current client device for the ongoing client transmission.

12. The method according to claim 11, wherein the grating of permission further comprises:
granting the permission to each one of the client devices for a predefined period of time.

13. The method according to claim 11 or claim 12, further comprising:
detecting an end of the client transmission; and
maintaining the granted permission for the current client device until the end of the client transmission is detected
wherein the detecting of the end of the client transmission further comprises:
analyzing the message sequence of the current transmission; and
detecting an end sequence included in the message sequence of the current transmission..

14. The method according to any one of the claims 11 to 13, further comprising:
controlling an n-to-1 TX multiplexer to selectively connect the one of the client ports to the host port in accordance with the arbitration scheme.

15. The method according to any one of the claims 11 to 14, further comprising:
detecting a host transmission of a message sequence received at the host port from the host device;
detecting a port identifier comprises in the host transmission of the message sequence; and
forwarding the host transmission to one of the client ports, which is associated with the detected port identifier.
